# FASCICULE DE BREVET EUROPEEN

(11) **EP 3 740 694 B1**
(45) Date de publication et mention de la délivrance du brevet: **30.03.2022**
(21) Numéro de dépôt: 19703171.9
(22) Date de dépôt: 11.01.2019
(51) Int. Cl.: F16D 65/00, F16D 65/092

(54) **PLAQUETTE DE FREIN À DISQUE COMPRENANT UNE RAINURE DE COLLECTE S'ÉTENDANT EN BIAIS**
SCHEIBENBREMSBELAG MIT SCHRÄG VERLAUFENDER SAMMELKERBE
DISK BRAKE PAD WITH OBLIQUELY EXTENDING COLLECTION GROOVE

(30) Priorité: 17.01.2018 FR 1850382
(43) Date de publication de la demande: 25.11.2020
(73) Titulaire: Tallano Technologie, 92100 Boulogne Billancourt (FR)
(72) Inventeur: ADAMCZAK, Loïc, 38390 MONTALIEU VERCIEU (FR); MAISTRE, Adrien, 94300 VINCENNES (FR)
(74) Mandataire: Plasseraud IP
(86) Numéro de dépôt international: PCT/FR2019/050063
(87) Numéro de publication internationale: WO 2019/141927

(56) Documents cités:
- DE-A1- 19 846 887
- FR-A1- 2 903 748
- FR-A1- 3 034 831

## Description

### Domaine de l'invention

La présente invention concerne une plaquette de frein pour les ensembles de frein à disque pour des véhicules et des matériels roulants ferroviaires.

On notera que selon l'invention, le véhicule peut être de tout type et peut notamment être une voiture, un camion ou un bus. De même, le matériel roulant ferroviaire peut être un train, un tramway ou encore un métropolitain.

### Arrière-plan technologique de l'invention

Un véhicule ou un matériel roulant ferroviaire comprend généralement un système de freinage. Le système de freinage peut notamment être un système de frein à disque. Le système de freinage comporte alors un disque solidaire d'une roue ou d'un essieu du véhicule ou du matériel roulant ferroviaire. Ainsi, lorsque la roue, ou l'essieu, entre en rotation pour permettre au véhicule ou au matériel roulant ferroviaire de se déplacer, le disque entre également en rotation.

Ainsi, pour freiner le véhicule ou le matériel roulant ferroviaire, le système de frein à disques comprend des moyens de friction du disque. Les moyens de friction comportent notamment deux semelles qui portent chacune une garniture qui comprend un matériau de friction. Le matériau de friction est configuré pour venir en contact avec le disque. Les deux semelles portant les garnitures de friction sont disposées de part et d'autre du disque de façon à le prendre en tenaille lorsque le système de frein est actionné.

Cependant, lorsque le matériau de friction entre en contact avec le disque pendant que ce dernier est en rotation, le matériau de friction émet des particules nocives pour l'environnement. Les systèmes de freinage sont donc polluants.

C'est pourquoi, il est connu d'agencer un dispositif d'aspiration des particules issues du freinage dans le système de freinage. Le dispositif d'aspiration est destiné à aspirer les particules du freinage peu après l'émission de ces dernières.

Toutefois, le dispositif d'aspiration est conformé principalement pour fonctionner lorsque la plaquette de freinage est dans une configuration « sortie d'usine ». Ainsi, au cours de son utilisation, l'aspiration des particules de freinage peut s'avérer moins efficace. Le document FR 3 034 831 décrit une plaquette de frein avec une rainure de collecte de particules de la garniture du frein.

### Objet de l'invention

Un but de l'invention est de fournir une plaquette de frein pour un ensemble de frein à disque dont les performances restent constantes, voire sont améliorées ou au moins sont peu détériorées, au cours du temps.

### Bref résumé de l'invention

Pour ce faire, on prévoit selon l'invention une plaquette de frein pour un ensemble de frein à disque, comprenant une garniture en matériau de friction et une semelle supportant la garniture, dans laquelle :
- la garniture comprend :
   o une face de friction et une face de fixation,
   o un bord arrière, situé du côté où le disque est apte à sortir d'une interface avec la plaquette lorsque le disque tourne dans une direction d'avancement du véhicule, et un bord avant,
   o un bord intérieur et un bord extérieur, et
   o une rainure de collecte ouverte sur la face de friction et agencée à proximité du bord arrière,
- la semelle comporte un trou en communication de fluide avec la rainure de collecte, le trou pouvant être relié à une source de dépression via des moyens de communication,
la garniture comportant une zone arrière comprenant le bord arrière et la rainure de collecte, la zone arrière comportant une portion chanfreinée de sorte qu'une aire d'une surface de friction de la zone arrière augmente lorsqu'une épaisseur de la zone arrière diminue, la rainure de collecte étant agencée à distance d'une surface libre de la portion chanfreinée et caractérisée en ce que la rainure de collecte comprend une section transversale qui s'étend en biais vers la surface libre de la portion chanfreinée, et en ce que la rainure de collecte débouche sur l'un parmi les bords intérieur et extérieur.

Ainsi, au fur et à mesure que la plaquette de frein est usée lors de son utilisation, l'aire de la surface de friction de la zone arrière qui est disposée entre la rainure de collecte et le bord arrière de la garniture augmente. De ce fait, des particules de freinage vont être émises vers l'arrière du véhicule et ce, en aval de la rainure de collecte. Cependant, comme la section transversale de la rainure de collecte s'étend en biais vers la surface libre de la portion chanfreinée, une distance entre cette surface libre et la rainure de collecte augmente moins, voire reste identique, que si la section transversale de la rainure de collecte s'étendait perpendiculairement à un plan comportant la face de fixation de la garniture. L'efficacité de la collecte des particules de freinage est donc conservée ou faiblement altérée, voire améliorée au cours de l'utilisation de la plaquette de frein.

En outre, la portion chanfreinée disposée en zone arrière permet d'assurer un contact moins brutal entre la garniture et le disque. La plaquette de frein présente ainsi de meilleures performances acoustiques, le bruit durant le freinage étant réduit.

De plus, la portion chanfreinée forme une rampe pour l'évacuation de l'eau, par exemple due à des précipitations ou issue de gel fondu.

On notera par ailleurs que par « surface de friction », on entend la portion de la surface de friction de la garniture qui est apte à effectivement entrer en contact direct avec le disque lors du freinage.

En outre, dans divers modes de réalisation de l'invention, on peut avoir également recours à l'une et/ou à l'autre des dispositions suivantes :
- la section transversale de la rainure forme un angle avec une droite normale à la face de fixation compris entre 20° et 80° ou entre 30° et 60° ou de préférence entre 40° et 50° ;
- la section transversale de la rainure s'étend sensiblement parallèlement à une section de la surface libre de la portion chanfreinée ;
- une distance entre la rainure de collecte et la surface libre de la portion chanfreinée est constante le long de la rainure de collecte ;
- la garniture comporte une zone arrière comportant le bord arrière, la zone arrière comprenant en outre une portion chanfreinée de sorte qu'une aire d'une surface de friction de la zone arrière augmente lorsqu'une épaisseur de la zone arrière diminue ;
- une aire de la portion chanfreinée de la zone arrière et une aire de la portion chanfreinée de la zone arrière sont sensiblement égales ;
- les portions chanfreinées des zones arrière et arrière sont planes, un angle formé entre la portion chanfreinée de la zone arrière et un plan comprenant la face de fixation est sensiblement égal à un angle formé entre la portion chanfreinée de la zone arrière et le plan comprenant la face de fixation ;
- la rainure de collecte est creusée directement dans le matériau de friction, jusqu'à la surface de la semelle ;
- la rainure de collecte s'étend entre une extrémité débouchante et une extrémité borgne, le trou de la semelle débouchant dans la rainure à proximité de l'extrémité borgne.

En outre, on prévoit aussi selon l'invention un ensemble de frein à disque comportant un disque et deux plaquettes de frein telles que décrites ci-dessus et disposées de part et d'autre du disque.

On prévoit enfin selon l'invention un système de frein à disque qui comprend un ensemble de frein à disque tel que décrit ci-dessus et dans lequel le disque est solidaire d'un essieu ou d'une roue.

### Brève description des dessins

On va maintenant décrire, à titre d'exemple non limitatif, un mode de réalisation de l'invention à l'aide des figures suivantes :
- la figure 1 représente en perspective un système de frein à disque selon un mode de réalisation de l'invention,
- la figure 2 représente ce système de frein à disque, vu depuis un axe perpendiculaire à un plan principal d'un disque du système de frein à disque,
- la figure 3 illustre en perspective une plaquette de frein du système de frein à disque,
- la figure 4 illustre en coupe selon le plan IV-IV repéré sur la figure 3, la plaquette de frein,
- la figure 5 représente selon ce même plan de coupe la plaquette après une certaine durée d'utilisation conduisant à une usure relative,
- la figure 6 illustre selon ce même plan de coupe une plaquette selon une variante du mode de réalisation de l'invention.

### Description détaillée d'un mode de réalisation de l'invention

On notera que par souci de clarté, seuls les éléments utiles à la compréhension des modes de réalisation décrits ont été représentés et seront détaillés.

En outre, sauf précision contraire, les expressions "sensiblement", "environ" etc. signifient qu'une légère variation par rapport à la valeur nominale considérée est possible, notamment d'un pourcentage faible, en particulier à 10% près.

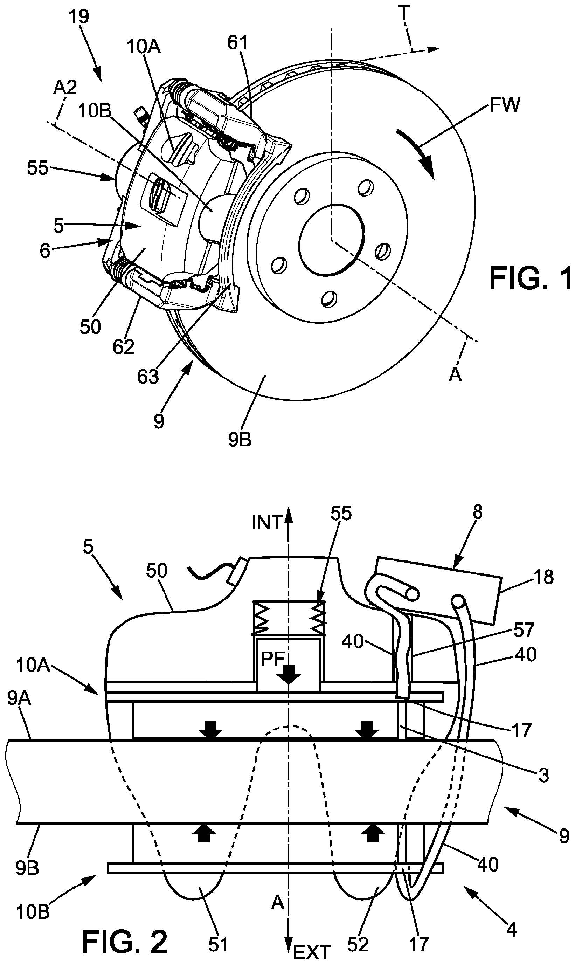

On a représenté aux figures 1 et 2 un système de frein à disque 19 selon l'invention pour un véhicule. Dans ce mode de réalisation, le véhicule est un véhicule automobile, dans le cas d'espèce une voiture légère. On notera toutefois que l'invention peut être mise en oeuvre pour tout type de véhicule, tel qu'un tracteur pour semiremorque, un bus ou un tracteur agricole, ou pour tout type de matériel roulant ferroviaire, tel qu'une locomotive ou un wagon.

Le système de frein à disque 19 selon l'invention comporte un disque 9, d'axe A solidaire d'une roue du véhicule. Le disque 9 présente une face latérale 9A et une face latérale 9B opposée. Les faces latérales 9A, 9B sont perpendiculaires à l'axe A. Le disque 9 est également relié à un mécanisme de transmission, par l'intermédiaire notamment d'un moyeu, lui-même relié à un moteur du véhicule. Ainsi, le mécanisme de transmission permet de transmettre à la roue du véhicule, par l'intermédiaire du disque 9, un mouvement de rotation autour de l'axe A et ce, afin de déplacer le véhicule.

En outre, le système de frein à disque 19 comporte un étrier 5 qui enserre, de façon à prendre en sandwich, une portion du disque 9. Comme illustré notamment sur la figure 2, l'étrier 5 se présente sous la forme d'un corps principal 50 qui présente une forme général en U de façon à enserrer le disque 9. En outre, le corps principal 50 comporte une cavité permettant de loger un piston 55. L'étrier 5 comporte aussi deux doigts 51, 52. Le piston 55 est apte à exercer une force PF selon une direction A2 repérée sur la figure 1 et qui est parallèle à l'axe A du disque.

Sur la figure 1, on a représenté un sens de rotation FW du disque 9 qui correspond à une marche avant du véhicule. On a également représenté une direction tangentielle T sur une circonférence du disque 9.

On définit aussi un côté arrière et un côté avant opposé. Le côté arrière correspond au côté où le disque 9 sort de l'interface avec l'étrier 5 lorsque le disque 9 tourne dans la direction d'avancement du véhicule. Le côté avant est le côté opposé et correspond au côté où le disque 9 entre dans l'interface avec l'étrier 5 lorsque le disque 9 tourne dans la direction d'avancement du véhicule. De plus, on définit pour une direction radiale allant de l'axe A vers la circonférence du disque 9, une direction qui va de l'intérieur vers l'extérieur.

Le système de frein à disque 19 comprend un support d'étrier 6 qui est fixé à un organe du véhicule. Cet organe peut notamment être un bras de suspension du véhicule. En outre, le support d'étrier 6 comprend deux pontets 61, 62 disposés à deux extrémités longitudinales arrière et avant de l'étrier 5 et un arc de liaison 63 qui relie les deux pontets 61, 62. Le pontet 61 est un pontet arrière et le pontet 62 est un pontet avant.

Le système de frein à disque 19 comporte aussi deux plaquettes de frein 10A, 10B logées dans l'étrier 5. Les deux plaquettes de frein 10A, 10B sont disposées de part et d'autre du disque 9. La plaquette de frein 10A est disposée en regard de la face latérale 9A du disque 9. La plaquette de frein 10B est disposée en regard de la face latérale 9B du disque 9. Ainsi, les deux plaquettes de frein 10A, 10B sont disposées symétriquement par rapport à un plan comportant le disque 9 et perpendiculaire à l'axe A du disque 9.

Le piston 55 de l'étrier 5 est agencé pour exercer la force PF sur la plaquette de frein 10A de sorte que les deux plaquettes 10A, 10B viennent en contact avec le disque 9 de façon à freiner le véhicule lorsque le système de frein à disque 19 est actionné par un conducteur du véhicule. On note que dans l'exemple illustré, l'étrier 5 est monté « flottant » dans le support d'étrier 6, le long de l'axe A. Ainsi, l'étrier 5 peut se déplacer parallèlement à l'axe A notamment pour compenser l'usure progressive des plaquettes 10A, 10B. En revanche l'étrier 5 est maintenu solidaire du support d'étrier 6 selon les autres translations et rotations potentielles. Le montage flottant est habituellement réalisé grâce à des colonnettes coulissantes selon l'axe A.

On va maintenant décrire plus en détail, la plaquette de frein 10A. En tenant compte des effets de symétrie, la description qui suit est également valable pour la plaquette de frein 10B.

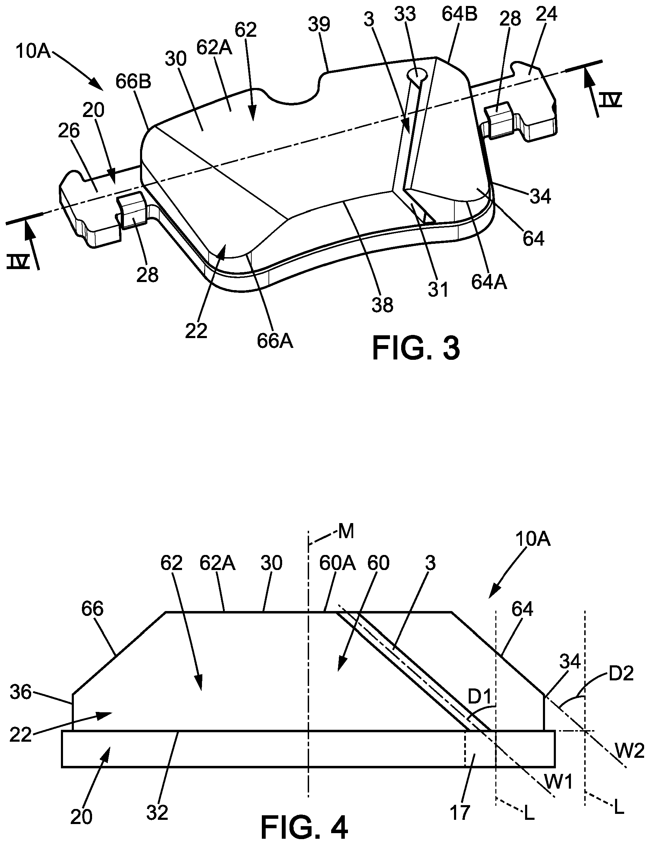

La plaquette 10A est notamment illustrée aux figure 3 et 4. Ainsi, la plaquette de frein 10A comprend une semelle 20 qui supporte une garniture de friction 22. La semelle 20 se présente sous la forme d'une plaque pleine métallique et d'épaisseur sensiblement constante. La semelle 20 comporte un bras arrière 24 et un bras avant 26 qui permettent de fixer la semelle 20 au corps principal 55 de l'étrier 5 au moyen de crochets 28. La semelle 20 comporte une face de fixation à laquelle est fixée la garniture de friction 22. La face opposée à la face de fixation est fixée au piston 55 comme illustré sur la figure 2.

La garniture de friction 22 se présente sous la forme d'un corps en matériau de friction apte à venir en contact avec la face latérale 9A du disque 9 afin de freiner le véhicule. Le matériau de friction est parfois appelé « ferodo ». La garniture de friction 22 comporte donc une face de friction 30 destinée à entrer en contact direct avec la face latérale 9 du disque 9. La garniture de friction 22 comporte aussi une face de fixation 32, opposée à la face de friction 30, et fixée directement à la face de fixation de la semelle 20. De plus, en référence aux côtés précédemment définis, la garniture de friction 22 comporte un bord arrière 34 et un bord avant 36 opposé. La garniture de friction 22 comporte également un bord intérieur 38 et un bord extérieur 39.

Lorsque le système de frein à disque 19 est actionné, le contact entre la face de friction 30 de la garniture de friction 22 de la plaquette de frein 10A et la face latérale 9A du disque 9 génère l'émission de particules de freinage polluantes. Ces particules de freinage correspondent à des particules du matériau de friction qui se détachent de la garniture de friction 22 par abrasion avec la face latérale 9A du disque 9 ainsi qu'à des particules qui se détachent du disque 9. C'est pourquoi, le système de frein à disque 19 comporte des moyens d'aspiration des particules de freinage décrites ci-après.

La garniture de friction 22 comporte une rainure de collecte 3. La rainure de collecte 3 est ouverte sur la face de friction 30 et est agencée à proximité du bord arrière 34 de la garniture de friction 22. Ainsi, en marche avant du véhicule, les particules de freinage sont entrainées vers la rainure de collecte 3, ce qui permet d'améliorer l'efficacité de la collecte. Lorsque le véhicule est freiné alors qu'il est en marche avant, les particules de freinage sont émises vers l'avant FW, en référence à la marche avant du véhicule. Ainsi, la captation des particules de freinage est d'autant plus efficace que la rainure de collecte 3 est disposée près d'une bordure arrière d'une portion de la face de friction 30 qui est directement en contact avec la face latérale 9A du disque 9.

Comme représenté à la figure 2, la rainure de collecte 3 est unique, rectiligne et continue. Elle est de largeur constante. En outre, la rainure de collecte 3 est directement creusée dans le matériau de friction et ce, jusqu'à la semelle 20.

La rainure de collecte 3 s'étend en outre entre une extrémité débouchante 31 et une extrémité borgne 33. L'extrémité débouchante 31 est disposée sur le bord intérieur 38 de la garniture de friction 22. L'extrémité borgne 33 est disposée à proximité du bord extérieur 39. Bien entendu, l'extrémité débouchante 31 peut aussi être disposée sur le bord extérieur 39 de la garniture de friction 22. L'extrémité borgne 33 peut aussi être disposée à proximité du bord intérieur 38 de la garniture de friction 22.

La semelle 20 comporte un trou 17 qui débouche dans la rainure de collecte 3. Le trou 17 est sensiblement en regard de l'extrémité borgne 33. Le trou 17 peut être plus généralement disposé à proximité de l'extrémité borgne 33. Le trou 17 est aussi en communication pneumatique avec la rainure de collecte 3.

De plus, comme illustré sur la figure 2, le système de frein à disque 19 comporte un dispositif d'aspiration 8 en communication pneumatique avec le trou 17 au moyen d'un tuyau souple 40 qui traverse le corps principal 50 de l'étrier 5. Le dispositif d'aspiration 8 comporte une source de dépression, par exemple une turbine, et un filtre permettant de filtrer l'air aspiré et chargé en particules de freinage. La source de dépression est configurée pour aspirer depuis la rainure de collecte 3.

Ainsi, le trou 17 est relié à une source de dépression via des moyens de communication qui comportent ici le tuyau souple 40.

De plus, la garniture de friction 22 comporte une zone arrière 60 et une zone avant 62. La zone arrière 60 comporte le bord arrière 34 de la garniture de friction 22 et la rainure de collecte 3. La zone avant 62 comporte le bord avant 36. La zone arrière 60 et la zone avant 62 sont disposées l'une à la suite de l'autre et sont en contacts. Elles occupent chacune sensiblement une moitié de la garniture de friction 22. On a représenté à la figure 4, un axe M qui délimite la frontière entre la zone arrière 60 et la zone avant 62.

La zone arrière 60 comporte une surface de friction 60A qui est une surface apte à entrer directement en contact avec la face latérale 9A du disque 9 lorsque le système de frein 19 est actionné. De même, la zone avant 62 comporte une surface de friction 62A qui est une surface apte à entrer directement en contact avec la face latérale 9A du disque 9 lorsque le système de frein 19 est actionné.

La zone arrière 60 comporte une portion chanfreinée 64 qui relie la surface de friction 60A de la zone arrière 60 et le bord arrière 34 de la garniture de friction 22 de sorte qu'une épaisseur de garniture de friction 22 est plus importante au niveau d'une portion qui comporte la surface de friction 60A qu'au niveau d'une portion qui comprend le bord arrière 34. Ainsi, lorsque l'épaisseur de la zone arrière 60 diminue, notamment en raison de l'usure due à l'utilisation de la plaquette de frein 10A, une aire de la surface de friction 60A de la zone arrière 60 augmente.

De même, la zone avant 62 comporte une portion chanfreinée 66 qui relie la surface de friction 62A de la zone avant 62 et le bord avant 36 de la garniture de friction 22 de sorte qu'une épaisseur de garniture de friction 22 est plus importante au niveau d'une portion qui comporte la surface de friction 62A qu'au niveau d'une portion qui comprend le bord avant 36. Ainsi, lorsque l'épaisseur de la zone avant 62 diminue, notamment en raison de l'usure due à l'utilisation de la plaquette de frein 10A, une aire de la surface de friction 62A de la zone avant 62 augmente.

On comprend donc, notamment à l'aide de la figure 3, que les portions chanfreinées 64, 66 respectivement de la zone arrière 60 et de la zone avant 62 ne font respectivement pas partie des surfaces de friction 60A, 62A des zones arrière 60 et avant 62.

On notera que dans le présent mode de réalisation, une aire d'une surface libre de la portion chanfreinée 64 de la zone arrière 60 et une aire d'une surface libre de la portion chanfreinée 66 de la zone avant 62 sont sensiblement égales. Ainsi, en configuration « sortie d'usine », l'aire de la surface de friction 60A de la zone arrière 60 est sensiblement égale à l'aire de la surface de friction 62A de la zone avant 62.

Selon des variantes, ces deux aires peuvent différer. Notamment, l'air de la surface libre de la portion chanfreinée 66 de la zone avant 62 pourra être plus importante que l'aire de la surface libre de la portion chanfreinée 64 de la zone arrière 60. Ainsi, durant l'utilisation de la plaquette de frein 10A, l'aire de la surface de friction 62A de la zone avant 62 aura tendance à devenir plus importante que l'aire de la surface de friction 60A de la zone arrière 60. De ce fait, lorsque le système de frein 19 est actionné tandis que le véhicule est en marche avant, plus de particules de freinage seront émises en amont de la rainure de collecte 3 et ce vers la rainure de collecte 3. L'efficacité de la captation des particules de freinage est donc conservée au cours du temps, l'effet indiqué ci-dessus venant compenser l'effet de l'usure du système de freinage 19.

De plus, comme illustré sur la figure 4 notamment, les portions chanfreinées 64, 66 sont planes. La surface libre de la portion chanfreinée 64 forme ainsi, avec un plan qui comporte la surface de fixation 32 de la garniture de friction 22, un angle qui est sensiblement égal à un angle formé entre la surface libre de la portion chanfreinée 66 et le plan qui comporte la garniture de friction 22.

En outre, les portions chanfreinées 64, 66 respectivement des zones arrière 60 et avant 62 ont aussi pour propriété de permettre une mise en contact moins brutale entre la face latérale 9A du disque 9 et la garniture de friction 22 lorsque le système de freinage 19 est actionné. Ainsi, le bruit et les vibrations générés lors du freinage sont diminués. En outre, les portions chanfreinées 64, 66 forment des rampes pour évacuer de l'eau, par exemple provenant de précipitations.

De plus, comme on le constate sur la figure 3, la portion chanfreinée 64 de la zone arrière 60 comporte une bordure intérieure 64A et une bordure extérieure 64B qui sont respectivement partiellement confondues avec les bords inférieur 38 et extérieur 39 de la garniture de friction 22. La bordure intérieure 64A présente une longueur relativement moins importante que la bordure extérieure 64B.

De même, la portion chanfreinée 66 de la zone arrière 62 comporte une bordure intérieure 66A et une bordure extérieure 66B qui sont respectivement partiellement confondues avec les bords inférieur 38 et extérieur 39 de la garniture de friction 22. La bordure intérieure 66A présente une longueur relativement moins importante que la bordure extérieure 66B.

De plus, comme on le voit sur les figures 3 et 4, la rainure de collecte 3 est agencée à distance de la surface libre de la portion chanfreinée 64 de la zone arrière 60. La rainure de collecte 3 est disposée à une distance de la surface libre de la portion chanfreinée 64 qui est sensiblement constante le long de la rainure de collecte 3.

En outre, comme illustré sur la figure 4, selon une section transversale, la rainure de collecte 3 s'étend, depuis la face de friction 30 jusqu'à la face de fixation de la semelle 20, en biais vers la surface libre de la portion chanfreinée 64.

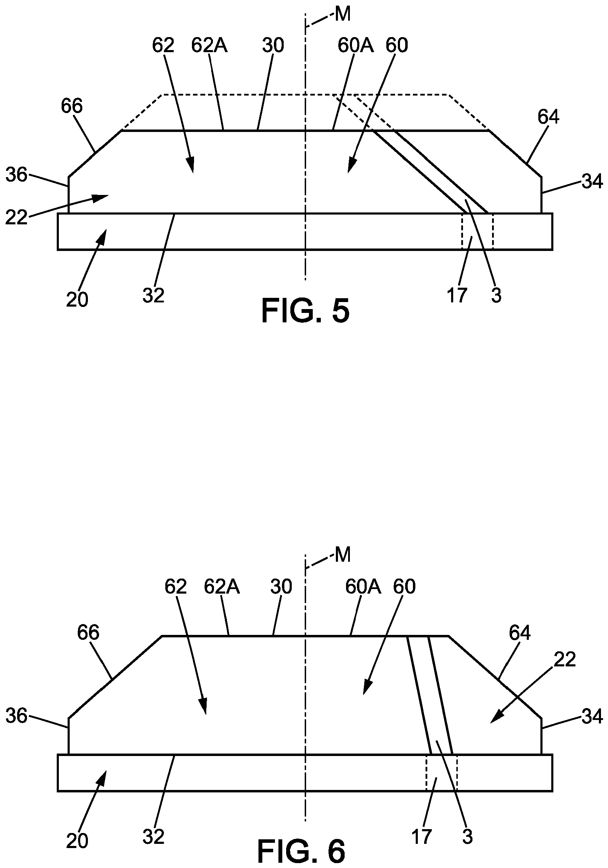

Selon le présent mode de réalisation, la section transversale de la rainure de collecte 3 s'étend sensiblement parallèlement à la surface libre de la portion chanfreinée 64. Ainsi, une distance entre la rainure de collecte 3 et la surface libre de la portion chanfreinée est constante même lorsque la garniture de friction 22 présente une certaine usure comme on le constate en comparant les figures 4 et 5. On a en effet représenté en pointillés sur la figure 5 une partie de la garniture de friction 22 qui a disparu suite à l'usure de la garniture de friction 22.

L'efficacité de la captation des particules de freinage est donc préservée malgré l'usure de la garniture de friction 22.

De plus, on a représenté sur la figure 4 un angle D1 correspondant à un angle formé entre la section transversale de la rainure de collecte 3 et une droite L perpendiculaire à la face de fixation 32 de la garniture de friction 22. Ici, l'angle D1 est sensiblement égal à 45°. L'angle D1 est plus spécifiquement définit entre un axe W1 de la rainure de collecte 3 et l'axe L.

Selon des variantes, l'angle D1 est compris entre 20° et 80° ou entre 30° et 60° ou entre 40° et 50°.

On a aussi représenté sur la figure 4 un angle D2 correspondant à un angle formé entre une droite W2 portée par la surface libre de la portion chanfreinée 64 et la droite L. Dans le mode de réalisation illustré à la figure 4, D1 et D2 sont égaux.

Cependant, de manière plus générale, D1 est supérieure strictement à 0° et est inférieur ou égal à D2. Selon une variante, D1 est strictement supérieur à D2.

De même, un angle formé entre la surface libre de la portion chanfreinée 64 de la zone arrière 60 avec un plan qui comprend la face de fixation 32 de la garniture de friction 22, et qui est donc normal à la droite L, est sensiblement identique à un angle formé entre la surface libre de la portion chanfreinée 66 de la zone avant 62 et ce plan comprenant la face de fixation 32 de la garniture de friction 22.

On a représenté à la figure 6 une variante du mode de réalisation décrit ci-dessus. Seules les différences vont être indiquées.

Selon la variante de la figure 6, la section transversale de la rainure de collecte 3 ne s'étend pas sensiblement parallèlement à la surface libre de la portion chanfreinée.

On pourra bien entendu apporter à l'invention de nombreuses modifications sans sortir du cadre défini par les revendications.

L'angle D1 pourra aussi être compris entre 60° et 80° et notamment être sensiblement égal à 70.

On pourra notamment utiliser tout type de source de dépression ou plus généralement de moyens d'aspiration.

On pourra aussi utiliser tout type de matériau pour la garniture de friction 22.

## Revendications

1. Plaquette de frein (10A, 10B) pour un ensemble de frein à disque (9), comprenant une garniture (22) en matériau de friction et une semelle (20) supportant la garniture (22), dans laquelle :
- la garniture (22) comprend :
o une face de friction (30) et une face de fixation (32),
o un bord arrière (34), situé du côté où le disque (9) est apte à sortir d'une interface avec la plaquette (10A, 10B) lorsque le disque (9) tourne dans une direction d'avancement du véhicule, et un bord avant (36),
o un bord intérieur (38) et un bord extérieur (39), et
o une rainure de collecte (3) ouverte sur la face de friction (30) et agencée à proximité du bord arrière (34),
- la semelle (20) comporte un trou (17) en communication de fluide avec la rainure de collecte (3), le trou (17) pouvant être relié à une source de dépression via des moyens de communication (40), la garniture (22) comportant une zone arrière (60) comprenant le bord arrière (34) et la rainure de collecte (3), la zone arrière (60) comportant une portion chanfreinée (64) de sorte qu'une aire d'une surface de friction (60A) de la zone arrière (60) augmente lorsqu'une épaisseur de la zone arrière (60) diminue, la rainure de collecte (3) étant agencée à distance d'une surface libre de la portion chanfreinée (64) **caractérisé en ce que** la rainure de collecte (3) comprend une section transversale qui s'étend en biais vers la surface libre de la portion chanfreinée (64) et **en ce que** la rainure de collecte (3) débouche sur l'un parmi les bords intérieur (38) et extérieur (39).

2. Plaquette de frein (10A, 10B) selon la revendication précédente, dans laquelle la section transversale de la rainure (3) forme un angle (D1) avec une droite (L) normale à la face de fixation (30) compris entre 20° et 80° ou entre 30° et 60° ou de préférence entre 40° et 50°.

3. Plaquette de frein (10A, 10B) selon l'une quelconque des revendications précédentes, dans laquelle la section transversale de la rainure (3) s'étend sensiblement parallèlement à la surface libre de la portion chanfreinée (64).

4. Plaquette de frein (10A, 10B) selon l'une quelconque des revendications précédentes, dans laquelle une distance entre la rainure (3) et la surface libre de la portion chanfreinée (64) est constante le long de la rainure (3).

5. Plaquette de frein (10A, 10B) selon l'une quelconque des revendications précédentes, dans laquelle la garniture (22) comporte une zone avant (62) comportant le bord avant (36), la zone avant (62) comprenant en outre une portion chanfreinée (66) de sorte qu'une aire d'une surface de friction (62A) de la zone avant (62) augmente lorsqu'une épaisseur de la zone avant (62) diminue.

6. Plaquette de frein (10A, 10B) selon la revendication précédente, dans laquelle une aire de la surface libre de la portion chanfreinée (64) de la zone arrière (60) et une aire d'une surface libre d'une portion chanfreinée (66) de la zone avant (62) sont sensiblement égales.

7. Plaquette de frein (10A, 10B) selon la revendication 5, dans laquelle les surfaces libres des portions chanfreinées (64, 66) des zones arrière (60) et avant (62) sont planes, un angle formé entre la surface libre de la portion chanfreinée (64) de la zone arrière (60) et un plan comprenant la face de fixation (32) est sensiblement égal à un angle formé entre la surface libre de la portion chanfreinée (66) de la zone avant (62) et le plan comprenant la face de fixation (32).

8. Plaquette de frein (10A, 10B) selon l'une quelconque des revendications précédentes, dans laquelle la rainure de collecte (3) est creusée directement dans le matériau de friction, jusqu'à la surface de la semelle (20).

9. Plaquette de frein (10A, 10B) selon l'une quelconque des revendications précédentes, dans laquelle la rainure de collecte (3) s'étend entre une extrémité débouchante (31) et une extrémité borgne (33), le trou (17) de la semelle (20) débouchant dans la rainure (3) à proximité de l'extrémité borgne (33).

10. Ensemble de frein à disque comportant un disque (9) et deux plaquettes de frein (10A, 10B) selon l'une quelconque des revendications précédentes disposées de part et d'autre du disque (9).

11. Système de frein à disque (19) comprenant un ensemble de frein à disque selon la revendication précédente, dans lequel le disque (9) est solidaire d'un essieu ou d'une roue.

## Patentansprüche

1. Bremsklotz (10A, 10B) für eine Scheibenbremsenanordnung (9), welcher einen Belag (22) aus Reibmaterial und eine Sohlplatte (20), die den Belag (22) trägt, umfasst, wobei:
- der Belag (22) umfasst:
∘ eine Reibfläche (30) und eine Befestigungsfläche (32),
∘ einen hinteren Rand (34), der sich auf der Seite befindet, wo die Scheibe (9) in der Lage ist, eine Schnittstelle mit dem Bremsklotz (10A, 10B) zu verlassen, wenn sich die Scheibe (9) in einer Richtung der Vorwärtsbewegung des Fahrzeugs dreht, und einen vorderen Rand (36),
∘ einen inneren Rand (38) und einen äußeren Rand (39), und
∘ eine Sammelnut (3), die auf der Reibfläche (30) offen ist und in der Nähe des hinteren Randes (34) angeordnet ist,
- die Sohlplatte (20) ein Loch (17) aufweist, das mit der Sammelnut (3) in Fluidverbindung steht, wobei das Loch (17) über Kommunikationsmittel (40) mit einer Unterdruckquelle verbunden werden kann,
wobei der Belag (22) einen hinteren Bereich (60) aufweist, der den hinteren Rand (34) und die Sammelnut (3) umfasst, wobei der hintere Bereich (60) einen abgeschrägten Abschnitt (64) aufweist, so dass ein Flächeninhalt einer Reibfläche (60A) des hinteren Bereichs (60) sich vergrößert, wenn sich eine Dicke des hinteren Bereichs (60) verringert, wobei die Sammelnut (3) in einem Abstand von einer freien Fläche des abgeschrägten Abschnitts (64) angeordnet ist, **dadurch gekennzeichnet, dass** die Sammelnut (3) einen Querschnitt aufweist, welcher sich schräg in Richtung der freien Fläche des abgeschrägten Abschnitts (64) erstreckt und dadurch, dass sich die Sammelnut (3) an einem der inneren (38) oder äußeren (39) Ränder mündet.

2. Bremsklotz (10A, 10B) nach dem vorhergehenden Anspruch, wobei der Querschnitt der Nut (3) einen Winkel (D1) mit einer zu der Befestigungsfläche (30) senkrechten Geraden (L) bildet, der zwischen 20° und 80° oder zwischen 30° und 60° oder vorzugsweise zwischen 40° und 50° liegt.

3. Bremsklotz (10A, 10B) nach einem der vorhergehenden Ansprüche, wobei sich der Querschnitt der Nut (3) im Wesentlichen parallel zu der freien Fläche des abgeschrägten Abschnitts (64) erstreckt.

4. Bremsklotz (10A, 10B) nach einem der vorhergehenden Ansprüche, wobei ein Abstand zwischen der Nut (3) und der freien Fläche des abgeschrägten Abschnitts (64) entlang der Nut (3) konstant ist.

5. Bremsklotz (10A, 10B) nach einem der vorhergehenden Ansprüche, wobei der Belag (22) einen vorderen Bereich (62) aufweist, der den vorderen Rand (36) aufweist, wobei der vordere Bereich (62) außerdem einen abgeschrägten Abschnitt (66) umfasst, so dass ein Flächeninhalt einer Reibfläche (62A) des vorderen Bereichs (62) sich vergrößert, wenn sich eine Dicke des vorderen Bereichs (62) verringert.

6. Bremsklotz (10A, 10B) nach dem vorhergehenden Anspruch, wobei ein Flächeninhalt der freien Fläche des abgeschrägten Abschnitts (64) des hinteren Bereichs (60) und ein Flächeninhalt einer freien Fläche eines abgeschrägten Abschnitts (66) des vorderen Bereichs (62) im Wesentlichen gleich sind.

7. Bremsklotz (10A, 10B) nach Anspruch 5, wobei die freien Flächen der abgeschrägten Abschnitte (64, 66) des hinteren (60) und des vorderen (62) Bereichs eben sind und ein Winkel, der zwischen der freien Fläche des abgeschrägten Abschnitts (64) des hinteren Bereichs (60) und einer die Befestigungsfläche (32) umfassenden Ebene gebildet wird, im Wesentlichen gleich einem Winkel ist, der zwischen der freien Fläche des abgeschrägten Abschnitts (66) des vorderen Bereichs (62) und der die Befestigungsfläche (32) umfassenden Ebene gebildet wird.

8. Bremsklotz (10A, 10B) nach einem der vorhergehenden Ansprüche, wobei die Sammelnut (3) direkt in das Reibmaterial eingeschnitten ist, bis zur Oberfläche der Sohlplatte (20).

9. Bremsklotz (10A, 10B) nach einem der vorhergehenden Ansprüche, wobei sich die Sammelnut (3) zwischen einem einmündenden Ende (31) und einem geschlossenen Ende (33) erstreckt, wobei das Loch (17) der Sohlplatte (20) in der Nähe des geschlossenen Endes (33) in die Nut (3) mündet.

10. Scheibenbremsenanordnung, welche eine Scheibe (9) und zwei Bremsklötze (10A, 10B) nach einem der vorhergehenden Ansprüche, die beiderseits an der Scheibe (9) angeordnet sind, umfasst.

11. Scheibenbremssystem (19), welches eine Scheibenbremsenanordnung nach dem vorhergehenden Anspruch umfasst, wobei sie Scheibe (9) mit einer Achse oder mit einem Rad fest verbunden ist.

## Claims

1. A brake pad (10A, 10B) for a disk brake assembly (9), comprising a lining (22) made of friction material and a plate (20) supporting the lining (22), wherein:
- the lining (22) comprises:
o a friction face (30) and a fastening face (32),
o a rear edge (34), located on the side where the disk (9) is capable of coming out of an interface with the pad (10A, 10B) when the disk (9) rotates in a direction of advance of the vehicle, and a front edge (36),
o an inner edge (38) and an outer edge (39), and
o a collection groove (3) open on the friction face (30) and arranged close to the rear edge (34),
- the plate (20) includes a hole (17) in fluid communication with the collection groove (3), the hole (17) being able to be connected to a vacuum source via communication means (40),
the lining (22) including a rear region (60) comprising the rear edge (34) and the collection groove (3), the rear region (60) including a chamfered portion (64) such that an area of a friction surface (60A) of the rear region (60) increases when a thickness of the rear region (60) decreases, the collection groove (3) being arranged at a distance from a free surface of the chamfered portion (64) **characterised in that** the collection groove (3) comprises a cross-section which extends obliquely towards the free surface of the chamfered portion (64) and **in that** the collection groove (3) leads into the inner edge (38) or outer edge (39).

2. The brake pad (10A, 10B) according to the preceding claim, wherein the cross-section of the groove (3) forms an angle (D1) with a straight line (L) normal to the fastening face (30) between 20° and 80° or between 30° and 60° or preferably between 40° and 50°.

3. The brake pad (10A, 10B) according to any one of the preceding claims, wherein the cross-section of the groove (3) extends substantially parallel to the free surface of the chamfered portion (64).

4. The brake pad (10A, 10B) according to any one of the preceding claims, wherein a distance between the groove (3) and the free surface of the chamfered portion (64) is constant along the groove (3).

5. The brake pad (10A, 10B) according to any one of the preceding claims, wherein the lining (22) includes a front region (62) including the front edge (36), the front region (62) further comprising a chamfered portion (66) such that an area of a friction surface (62A) of the front region (62) increases when a thickness of the front region (62) decreases.

6. The brake pad (10A, 10B) according to the preceding claim, wherein an area of the free surface of the chamfered portion (64) of the rear region (60) and an area of a free surface of a chamfered portion (66) of the front region (62) are substantially equal.

7. The brake pad (10A, 10B) according to claim 5, wherein the free surfaces of the chamfered portions (64, 66) of the rear region (60) and front region (62) are flat, an angle formed between the free surface of the chamfered portion (64) of the rear region (60) and a plane comprising the fastening face (32) is substantially equal to an angle formed between the free surface of the chamfered portion (66) of the front region (62) and the plane comprising the fastening face (32).

8. The brake pad (10A, 10B) according to any one of the preceding claims, wherein the collection groove (3) is hollowed out directly in the friction material, up to the surface of the plate (20).

9. The brake pad (10A, 10B) according to any one of the preceding claims, wherein the collection groove (3) extends between an open end (31) and a blind end (33), the hole (17) of the plate (20) leading into the groove (3) close to the blind end (33).

10. The disk brake assembly including a disk (9) and two brake pads (10A, 10B) according to any one of the preceding claims disposed on either side of the disk (9).

11. The disk brake system (19) comprising a disk brake assembly according to the preceding claim, wherein the disk (9) is integral with an axle or with a wheel.
